# EUROPÄISCHE PATENTSCHRIFT

(11) **EP 0 927 334 B1**
(45) Veröffentlichungstag und Bekanntmachung des Hinweises auf die Patenterteilung: **16.01.2002**
(21) Anmeldenummer: 97942784.6
(22) Anmeldetag: 29.08.1997
(51) Int. Cl.: G01B 11/24

(54) **VERFAHREN UND VORRICHTUNG FÜR DIE 3D-MESSUNG**
METHOD AND DEVICE FOR 3D MEASUREMENT
PROCEDE ET DISPOSITIF DE MESURE TRIDIMENSIONNELLE

(30) Priorität: 18.09.1996 DE 19639999
(43) Veröffentlichungstag der Anmeldung: 07.07.1999
(73) Patentinhaber: GF Messtechnik GmbH, 14513 Teltow (DE)
(72) Erfinder: FRANKOWSKI, Gottfried, D-10711 Berlin (DE)
(74) Vertreter: Hengelhaupt, Jürgen, Dipl.-Ing.
(86) Internationale Anmeldenummer: DE9701948
(87) Internationale Veröffentlichungsnummer: WO9812501

(56) Entgegenhaltungen:
- CA-A- 2 163 934
- US-A- 5 372 502
- BOYSEL: "A 1920*1080 element deformable mirror device for high definition displays" IEEE TRANSACTIONS ON ELECTRON DEVICES., Bd. 38, Nr. 12, Dezember 1991, NEW YORK US, Seite 2715 XP002051088

## Beschreibung

Die Erfindung betrifft ein Verfahren und eine Vorrichtung für die Durchführung berührungsloser, opto-elektronischer 3D-Messungen an Gegenständen und Objekten, bei denen zur Codierung des Meßobjektes für die nachfolgende rechnergestützte Auswertung Intensitätsstrukturen (Gray-Codes) auf das Meßobjekt projiziert werden und unter Verwendung rechnergestützter optoelektronischer Signalanalyseverfahren an Hand der durch die räumliche Struktur des Meßobjektes verursachten Auslenkungen der Intensitätsstrukturen die Oberfächenbeschaffenheit, die Konfiguration (Körperform) und/oder die Abmessungen des Meßobjektes ermittelt werden.

Streifenprojektionsverfahren werden bereits seit mehreren Jahren in der optischen 3D-Meßtechnik eingesetzt, wobei prinzipiell zwischen Verfahren, die ein Projektionssystem mit festem Streifenabstand verwenden und Projektionssystemen mit variierbarem Streifenabstand, unterschieden werden kann.

Die mit Hilfe der Streifenprojektionsverfahren erzielbaren meßtechnischen Ergebnisse und Informationen werden in Abhängigkeit von den eingesetzten optischen und mikroskopischen Gerätesystemen wesentlich von der Qualität der projizierten Streifen bestimmt. Hinsichtlich der erzielbaren Informationen über das 3D-Profil eines Meßobjektes sind Streifenprojektionsverfahren mit variierbarem Streifenabstand von besonderem Vorteil, da sie durch entsprechende Signalaufnahmesysteme (CCD-Kameras, Framegrabber, Meßrechner) eine Grauwertcodierung der Oberfläche ermöglichen. Aus diesem Grunde werden solche Streifenprojektionsverfahren auch als Gray-Code-Verfahren bezeichnet.

Konventionelle Gray-Code-Verfahren verwenden für die Erzeugung der Projektionsstreifen (Gray-Codes) zumeist LCD-Chips, die durch entsprechende horizontale und/oder vertikale rechnergestützte Ansteuerung der Zeilen und/oder Spalten des LCD-Chips und eine entsprechende Beleuchtung die Projektion linienförmiger Muster ermöglichen.

Bekannt ist ferner, Gray-Code mit Hilfe unterschiedlich ausgebildeter Strukturen zu erzeugen, die auf einem Träger, beispielsweise auf einer Glasplatte, fest aufgebracht sind und mit einem geeigneten optischen System auf das Meßobjekt projiziert werden.

Als nachteilig erweist sich bei den genannten beiden Techniken zur Erzeugung von Gray-Code-Strukturen, daß die Möglichkeiten zur Erzeugung von Projektionsstreifen entweder an die Zeilen- und Spaltenstruktur des LCD-Chips gebunden oder daß das zu projizierende Muster fest und unveränderbar auf einen Trägermaterial gespeichert ist und somit nicht verändert werden kann.

Moderne optische 3D-Meßtechniken, die zumeist auf einer gleichzeitigen und/oder getrennten Anwendung von aktiven Triangulationsverfahren (Streifenprojektion) und von passiven Triangulationsverfahren (Fotogrammetrie) aufbauen, erfordern schnelle und unkompliziert variierbare Streifenprojektionen, die leicht und schnell den spezifischen geometrischen Verhältnissen des 3D-Profils und des Oberflächenzustandes des Meßobjektes angepaßt werden können. Dies ist jedoch mit den bekannten Streifenprojektionsverfahren nicht möglich.

LCD-Streifenprojektionen haben weiterhin den sehr großen Nachteil, daß der Kontrast der erzeugten Gray-Code-Streifen sehr niedrig ist und so für zahlreiche technische Anwendungen diese Streifenprojektionen nicht oder nur sehr beschränkt eingesetzt werden können.

Für zahlreiche meßtechnische Anwendungsfälle ist es notwendig, nicht nur amplitudenmodulierte Streifen (schwarz/weiß-Strukturen) mit rechteckigem Intensitätsverlauf, sondern auch phasenmodulierte Streifen (Grauwertstrukturen) mit einem definierten sinusförmigen Intensitätsverlauf zu erzeugen und im gleichen Meßzyklus auf das Meßobjekt zu projizieren, was unter Verwendung einer herkömmlichen LCD-Streifenprojektion nicht bzw. nur unter Verwendung zusätzlicher optischer Abbildungssysteme möglich ist.

Ein weiterer Nachteil besteht bei der Verwendung zusätzlicher optischer Abbildungssysteme darin, daß alle Gray-Code-Sequenzen sinusförmig moduliert sind bzw. die rechteckigen Sequenzen verzerrt werden, was sich wiederum ungünstig auf die meßtechnische Anwendung auswirkt, da hier zwecks Erreichung einer hohen meßtechnischen Auflösung sowohl rechteckige als auch sinusförmige Gray-Codes auf das Meßobjekt zu projizieren sind.

Zur Erzeugung von Streifenprojektionen für die Durchführung von 3D-Meßverfahren ist ebenfalls ein Gitterträger bekannt, auf dem eine größere Anzahl unterschiedlicher Streifenmuster mit einer sehr niedrigen Auflösung von 0,5 µm aufgebracht sind. Die jeweiligen Streifen werden durch Verschieben des Gitterträgers im Strahlengang eines Projektors auf das Meßobjekt projiziert, wobei sowohl rechteckförmige wie sinusförmige Streifenintensitäten erzeugt werden können und ein hoher Streifenkontrast erzielbar ist. Abgesehen von einem höheren apparativen Aufwand zum Verschieben des Gitterträgers und möglichen Stör- und Fehlereinflüssen durch die mechanischen Stellelemente besitzt diese Lösung für die Erzeugung und Projizierung von Streifenintensitäten eine relativ hohe Taktzeit und ist demzufolge für den oneline Einsatz von 3D-Meßverfahren in automatisierten und teilautomatisierten Fertigungslinien nur bedingt einsetztbar.

CA-A-2163934 zeigt eine Anordnung, in der zur Codierung des Meßobjektes mittels eines rotierenden Spiegels oder einer LCD-Matrix Intensitätsstrukturen auf das Meßobjekt projiziert werden und die Abmessungen des Meßobjektes unter Verwendung von rechnergestützten optoelektronischen Signalanalyseverfahren ermittelt werden.

Der Artikel von BOYSEL: "A 19201080 element deformable mirror device for high definition displays" IEEE TRANSACTIONS ON ELECTRON DEVICES., Bd. 38, Nr. 12, Dezember 1991, NEW YORK US, Seite 2715 zeigt isoliert ein Mikrospsiegelsystem, regt jedoch nicht die Verwendung in der 3D-Vermessung von Objekten an.

Der Erfindung liegt die Aufgabe zugrunde, in einem einzigen Aufnahmezyklus beliebige für die optische 3D-Meßtechnik verwertbare, definierte Intensitätsstrukturen (Streifencodes) zu erzeugen und auf das Meßobjekt zu projizieren.

Erfindungsgemäß wird die Aufgabe durch ein Verfahren nach Anspruch 1 und eine Vorrichtung mit den Merkmalen nach Anspruch 11 gelöst. Vorteilhafte Weiterbildungen der Erfindung ergeben sich aus den Unteransprüchen 2 bis 10.

Mit der vorliegenden Erfindung werden die vorstehend beschriebenen Nachteile der bisher bekannten und technisch eingesetzten Verfahren zur Erzeugung von Streifenprojektionen vollständig ausgeräumt.

Durch die Erzeugung und Projizierung von Streifenintensitäten mit einem Mikrospiegelprojektor, der eine Vielzahl von Teilspiegeln besitzt, die auf einem Träger angeordnet und mit Hilfe eines Rechners individuell ansteuerbar sind, können beliebige Intensitätsstrukturen in Form der in der 3D-Meßtechnik üblicherweise verwendeten Streifen- oder Linienmuster und auch mit einer sinusförmigen Modulation innerhalb eines äußerst kurzen Zeitintervalls innerhalb eines Aufnahmezyklusses erzeugt werden.

Insbesonders für fotogrammetrische Anwendungen besteht die Möglichkeit, spezielle dem 3D-Profil des Meßobjektes angepaßte geometrische Strukturen, wie beispielsweise Kreise, Punkte, Kreuze, Ellipsen, Rechtecke u.a., zu erzeugen, deren Verschneidung mit der Geometrie des Meßobjektes eine hochgenaue, rechnergestützte Erfassung des 3D-Profils des Meßobjektes gewährleistet, wobei die nach der Erfindung hergestellten Intensitätsstrukturen eine hohe Kontrastschärfe besitzen, die zu einer entscheidenen Steigerung der Meßgenauigkeit und des Leistungsvermögens der mit der 3D-Meßtechnik erreichbaren Ergebnisse und Informationen beitragen.

Analog bekannter Verfahren, die unter Verwendung von Dia-Projektoren eine Intensitätsstruktur erzeugen, die einem Laserspecklemuster oder einem statistischen Rauschmuster entspricht, sind mit der erfindungsgemäßen Lösung auch die Voraussetzungen geschaffen worden, derartige Intensitätsstrukturen zu erzeugen und zu projizieren.

Eine weitere Anwendung der Erfindung in der optischen 3D-Meßtechnik ist in der Projektion von Streifenmustern gegeben, die zur 3D-Form eines zu vermessenden oder zu prüfenden Körpers invers sind. Diese inversen Projektionsmuster werden auf einfache Weise erhalten, indem man zunächst eine Aufnahme von einem bestimmten, der Geometrie des Meßobjektes angepaßten Intensitätsmuster vornimmt und die 3D-Form speichert. Wird nun dieses Projektionsmuster, das die Objektform in codierter Form enthält, über einen Meß- und Steuerrechner dem Mikrospiegelprojektor zugeführt und von diesem auf das Meßobjekt projiziert, erfolgt eine Deformation der Projektionsmuster entsprechend der Form des Meßobjektes. Mit der Aufnahmekamera wird das sogenannte inverse Projektionsmuster festgehalten und bildet die Grundlage für die nachfolgende meßtechnische Auswertung. Auf diese Weise können ebenfalls die Taktzeiten für die 3D-Meßprozesse erheblich verkürzt werden.

Erfolgt die Erzeugung eines inversen Projektionsmusters z.B. unter Verwendung einer Projektion paralleler Streifen, so bedeutet dies, daß gekrümmte, der Form des Meßobjektes angepaßte Streifen projiziert und durch die Form des Objektes an der Aufnahmekamera gerade Streifen identifiziert werden. Unter Verwendung entsprechender mathematischer Auswertealgorithmen ist so die Möglichkeit gegeben, für eine schnelle Inspektion der Oberflächenform von Bauteilen (z.B. im Fertigungsprozeß) eine online-Inspektion zu realisieren, indem nur noch die Abweichung der von der Aufnahmekamera registrierten Streifen von der Idealform identifiziert werden müssen.

Eine weitere Anwendungsmöglichkeit eines nach der Erfindung hergestellten inversen Intensitätsmusters besteht darin, daß zunächst an Hand eines Projektionsmusters das Refelektionsverhalten der Oberfläche eines Meßobjektes aufgenommen und registriert wird. Wird nun über den Meß- und Steuerrechner die Intensitätsstruktur des Reflektionsverhaltens invertiert und auf ein zu messendes Objekt projiziert, so werden die stark reflektierenden Oberflächenbereiche mit dunkleren und wenig reflektierende Bereiche mit helleren Intensitätsstrukturen beleuchtet. Die so erhaltenen Meßsignale werden wiederum einer rechnergesteuerten Auswertung zugeführt. Auch mit dieser Ausführungsvariante können erhebliche Taktzeiten für die Durchführung von 3D-Meßvorgängen eingespart werden.

Insgeamt wird mit der erfindungsgemäßen Lösung in der opto-elektronischen 3D-Meßtechnik, inbsondere bei der Gray-Code-Streifenprojektion und in der Fotogrammetrie, eine erhebliche Erweiterung und Verbesserung der bisher bekannten technischen Möglichkeiten dieser Verfahren sowohl aus technischer als auch methodischer Sicht erzielt. Das vorgeschlagene Verfahren eignet sich gleichermaßen für die Gestaltung einer neuen Generation von Streifenprojektoren zur Ablösung der eingangs beschriebenen Projektionssysteme und zum Aufbau kompletter 3D-Meßmaschinen für den Einsatz in fertigungsnahe Bereiche und im betrieblichen Meßwesen.

Die Erfindung soll nachstehend an einem Ausführungsbeispiel näher erläutert werden. In den dazugehörigen Zeichnungen zeigen:
- Fig. 1a - 1c:: Intensitätsstrukturen mit rechteckförmigen Intensitätsverlauf
- Fig. 2a und 2b:: Intensitätsstrukturen mit kreisringförmigem Intensitätsverlauf
- Fig. 3:: eine Intensitätsstruktur mit kreuzförmigem Intensitätsverlauf
- Fig. 4 und 5:: eine Intensitätsstruktur mit verschiedenartigen Intensitätsverläufen

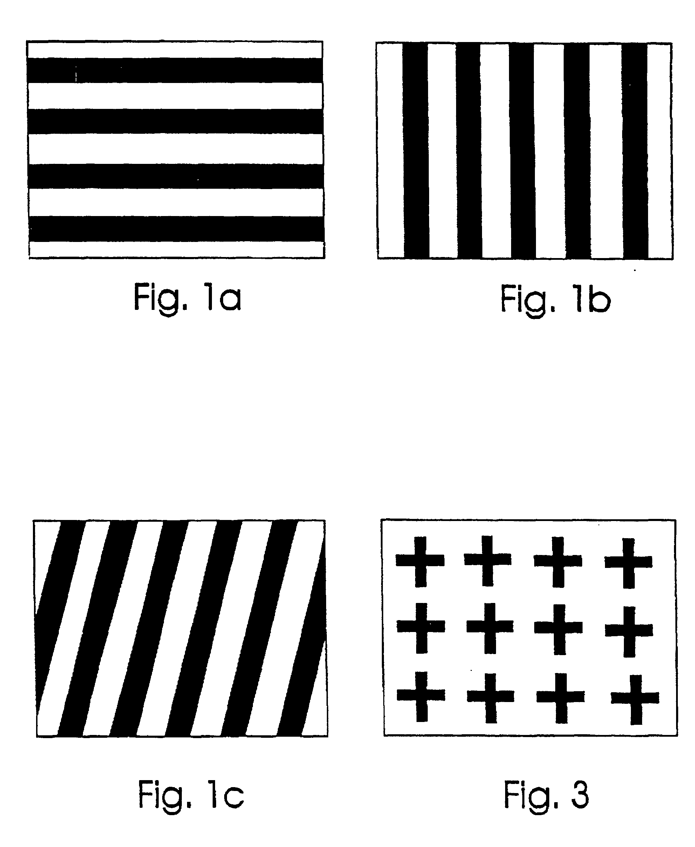

Die in den Fig. 1a bis 5 beispielhaft dargestellten Intensitätsstrukturen werden mit Hilfe eines erfindungsgemäß eingesetzten Mikrospiegelprojektors erzeugt, der in den Strahlengang einer Beleuchtungsquelle zur Abbildung von Intensitätsstrukturen auf ein Meßobjekt angeordnet ist. Zur Erzeugung und Projizierung der Intensitätsstrukturen mit unterschiedlichem Intensitäsverlauf auf das Meßobjekt werden die Mikrospiegel des Projektors gruppenweise und/oder einzeln mit einem Rechner angesteuert und ihre Positionierung zu den Lichtstrahlen der Beleuchtungsquelle verändert.

Fig. 1a und 1b zeigen rechteckförmige Intensitätsverläufe mit horizontaler oder vertikaler Orientierung, wie sie aus dem Stand der Technik bereits allgemein bekannt sind und beispielsweise für die Bestimmung der Körperform oder der Oberflächengüte eines Meßobjektes erfolgreich eingesetzt worden sind. Mit Hilfe der erfindungsgemäßen Lösung können in einem Meßzyklus innerhalb eines kurzen Zeitintervalls mehrere Intensitätsstrukturen mit unterschiedlich breiten, rechteckigen, sinusförmigen oder ähnlichen Intensitätsverläufen und unterschiedlichen Abständen zwischen den benachbarten Streifen erzeugt und mit einer Aufnahmekamera für die meßtechnische Auswertung erfaßt werden. Auf diese Weise läßt sich eine hohe Genauigkeit und eine höhere Aussage über das erzielte Meßergebnis erreichen.

Innerhalb des gleichen Meßzyklusses können auch Intensitätsstrukturen erzeugt werden, die, wie in Fig. lc dargestellt, einen geneigten Intensitätsverlauf zur vertikalen oder horizontalen Achse haben.

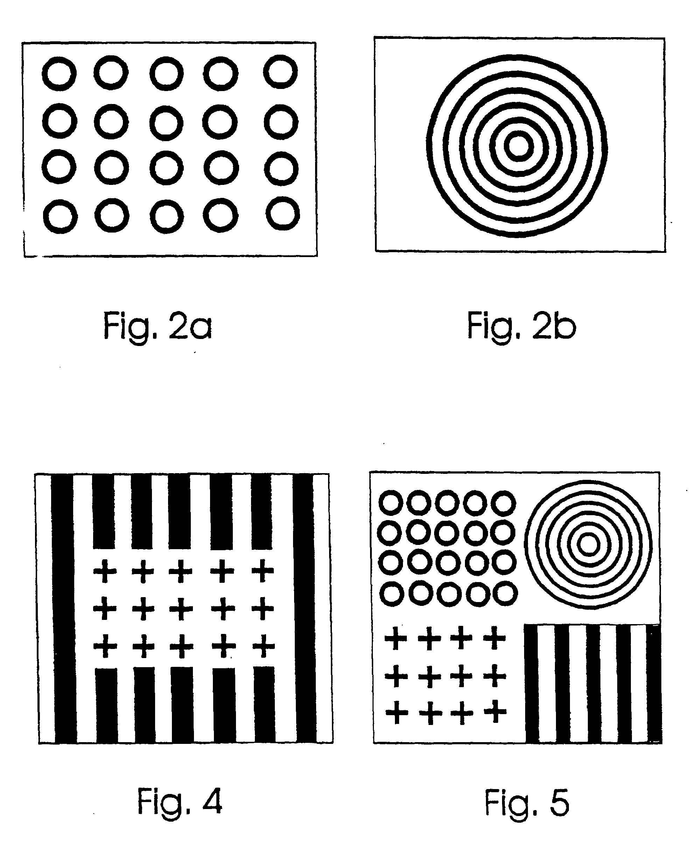

Nach Fig. 2a und 2b werden mit Hilfe des Mikrospiegelprojektors kreisförmige Intensitätsstrukturen erzeugt, die einen vereinzelten kreisförmigen Verlauf aufweisen oder in einem konzentrischen Verlauf auf das Meßobjekt projiziert werden können. Die erzeugten kreisförmigen Strukturen besitzen eine überaus hohe Konturschärfe und lassen sich in ihrer Breite beliebig variieren. Derartige kreisförmige Intensitätsstrukturen waren mit den bisher bekannten Einrichtungen und Verfahren für die 3D-Messung nicht herstellbar und werden beispielsweise vorteilhaft zum Messen der Form und der Oberfläche von Vertiefungen eingesetzt, die in einem Werkstück oder einem beliebigen Meßobjekt gemessen werden müssen.

Eine weitere Möglichkeit zur Herstellung einer Intensitätsstruktur mit einem kreuzförmigen Intensitätsverlauf zeigt Fig. 3, wobei die Anzahl der Verläufe und ihre körperliche Struktur beliebig variiert werden kann.

Mit der vorliegenden Erfindung können erstmals Intensitätsstrukturen mit einer unterschiedlichen Ausbildung und Orientierung der Intensitätsverläufe analog einer Bild-in-Bild-Funktion in einem einzigen Strukturbild erzeugt und auf das Meßobjekt projiziert werden. Die in Fig. 4 und 5 dargestellten Ausführungsvarianten dienen insbesondere zur meßtechnischen Bestimmung und Erfassung komplizierter Körperformen und einzelner Flächenabschnitte eines Meßobjektes.

## Patentansprüche

1. Verfahren für die berührungslose, opto-elektronische 3D-Messung von Gegenständen und Objekten, bei dem zur Codierung eines Meßobjektes für die nachfolgende rechnergestützte Auswertung beliebige Intensitätsverläufe (Gray-Codes) auf das Meßobjekt projiziert werden und mittels rechnergestützter optoelektronischer Auswerteverfahren anhand der durch die räumliche Struktur des Meßobjektes verursachten Auslenkungen der Streifen die Oberfächenbeschaffenheit, die Konfiguration (Körperform) und/oder die Abmessungen des Meßobjektes ermittelt wird, **dadurch gekennzeichnet, daß** die Intensitätsstrukturen mit einem Mikrospiegelsystem rechnergesteuert erzeugt und auf das Meßobjekt projiziert werden.

2. Verfahren nach Anspruch 1, **dadurch gekennzeichnet, daß** in einem Meßzyklus in kurzer, zeitlicher Folge Intensitätsstrukturen mit unterschiedlicher Strukturbreite und unterschiedlichen Abständen zwischen benachbarten Strukturen auf das Meßobjekt projiziert werden.

3. Verfahren nach Anspruch 2, **dadurch gekennzeichnet, daß** die Intensitätsverläufe eine rechteckige Intensitätsmodulierung aufweisen.

4. Verfahren nach Anspruch 2, **dadurch gekennzeichnet, daß** die zu projizierenden Intensitätsverläufe sinusförmig moduliert werden.

5. Verfahren nach Anspruch 2, **dadurch gekennzeichnet, daß** die auf das Meßobjekt zu projizierenden Intensitätsverläufe punkt-, kreis- oder ellipsenförmig moduliert werden.

6. Verfahren nach Anspruch 2, **dadurch gekennzeichnet, daß** die auf das Meßobjekt projizierten Intensitätsverläufe eine kreuzförmige Struktur aufweisen.

7. Verfahren nach Anspruch 2, **dadurch gekennzeichnet, daß** die auf das Meßobjekt projizierten Intensitätsverläufe einen speckleförmigen Verlauf aufweisen.

8. Verfahren nach Anspruch 2, **dadurch gekennzeichnet, daß** die auf das Meßobjekt projizierten Intensitätsverläufe eine statistische Rauschstruktur besitzen.

9. Verfahren nach einem der Ansprüche 2 bis 8, **dadurch gekennzeichnet, daß** Mikrostreifen mit horizontaler und vertikaler Ausrichtung der Streifen erzeugt und in einer Bild-in-Bild-Funktion auf das Meßobjekt projiziert werden.

10. Verfahren nach einem der Ansprüche 1 bis 9, **dadurch gekennzeichnet, daß** zunächst eine Aufnahme von einem bestimmten, der Geometrie des Meßobjektes angepaßten Intensitätsmuster vorgenommen und die 3D-Form gespeichert, danach dieses Projektionsmuster, das die Objektform in codierter Form enthält, über einen Meß- und Steuerrechner einem Mikrospiegelprojektor zugeführt und von diesem auf das Meßobjekt projiziert und die hervorgerufene Deformation des inversiven Projektionsmusters entsprechend der Form des Meßobjektes auf an sich bekannte Weise mit der Aufnahmekamera festgehalten und einer nachfolgenden meßtechnischen Auswertung zugeführt wird.

11. Vorrichtung zur Durchführung des Verfahrens nach Anspruch 1, bei dem zur Codierung eines Meßobjektes für die nachfolgende rechnergestützte Auswertung Intensitätsstrukturen (Gray-Codes) auf das Meßobjekt projiziert werden und mittels rechnergestützter Signalanalyseverfahren anhand der durch die räumliche Struktur des Meßobjektes verursachten Auslenkungen der Intensitätsverläufe die Oberfächenbeschaffenheit, die Konfiguration (Körperform) und/oder die Abmessungen des Meßobjektes ermittelt werden, **dadurch gekennzeichnet, daß** in den Strahlengang einer Lichtquelle zur Abbildung von Mikrostreifen auf einem Meßobjekt ein aus einer Vielzahl, in ihrer Anordnung mit Hilfe eines Rechners ansteuerbarer Mikrospiegel bestehender Projektor angeordnet ist.

## Claims

1. A method for contact-free, opto-electronic 3D-measuring of objects, where, for coding of an object and for further computerized evaluation, arbitrary intensity scales (graycodes) are projected onto an object and evaluated via computer supported opto-electronical evaluation procedure, using line pattern deflections created by the object volume structure, thus determining surface condition, configuration (shape), and/or object dimensions defined by intensity structures, which are computer generated via micromirror system and projected onto the object.

2. A method according to claim 1, defined by the intensity structures being projected onto an object in one measuring cycle with differing intensity structures and at varying structure distances between adjoining structures.

3. A method according to claim 2, defined by the projected intensity structures having a rectangular intensity modulation.

4. A method according to claim 2, defined by the projected intensity structures being modulated in a sinusoidal shape.

5. A method according to claim 2, defined by the projected intensity structures being modulated dot-shaped, circular, or elliptical.

6. A method according to claim 2, defined by the projected intensity structures having a cross-shaped pattern.

7. A method according to claim 2, defined by the projected intensity structures having a speckled pattern.

8. A method according to claim 2, defined by the projected intensity structures having a statistical noise structure.

9. A method according to one of the claims 2 to 8, defined by lines of a horizontal and vertically aligned pattern being projected onto an object in a image-in-image function.

10. A method according to one of the claims 1 to 9, defined for initial recording of a certain intensity pattern of the object geometry and storage of the 3D-shape. This projection pattern, containing the coded object shape, is transferred to a micromirror projector via measuring and control computer and projected onto the object. The deformation of the inversed projection pattern, according to the shape of the object to be measured, is then recorded with a camera in the conventional manner and transferred on for technical evaluation.

11. Device for execution of the method according to claim 1, where intensity structures (graycodes) are projected onto the object to be coded for later computerized evaluation. The surface condition, configuration (shape), and/or object dimensions are determined via computer supported signal-analysis, utilizing the intensity structure deflections caused by the volume structure of the object. This method is defined by a projector, consisting of a large number of computer-controlled micromirrors, arranged in the beam channel of a light source for imaging of microlines onto an object for measuring purposes.

## Revendications

1. Procédé pour la mesure opto-électronique sans contact et en 3 dimensions d'objets où, en vue du codage d'un objet de mesure pour évaluation consécutive assistée par ordinateur, des gradients d'intensité quelconques (codes Gray) sont projetés sur l'objet de mesure et où les caractéristiques de surface, la configuration (forme physique) et/ou les dimensions de l'objet de mesure sont déterminées au moyen d'un procédé d'évaluation optoélectronique assisté par ordinateur, en saisissant les déviations des barres provoquées par la structure spatiale de l'objet de mesure, **caractérisé en ce que** les structures d'intensité sont générées par un système de microréflecteurs commandés par ordinateur et sont projetées sur l'objet de mesure.

2. Procédé selon la revendication 1, **caractérisé en ce que** des structures d'intensité de différentes largeurs et intervalles entre des structures voisines sont projetées sur l'objet de mesure pendant un cycle de mesure à séquences temporelles courtes.

3. Procédé selon la revendication 2, **caractérisé en ce que** les gradients d'intensité présentent une modulation d'intensité rectangulaire.

4. Procédé selon la revendication 2, **caractérisé en ce que** les gradients d'intensité à projeter sont modulés en sinusoïde.

5. Procédé selon la revendication 2, **caractérisé en ce que** les gradients d'intensité à projeter sur l'objet de mesure sont modulés ponctuellement, circulairement ou en ellipse.

6. Procédé selon la revendication 2, **caractérisé en ce que** les gradients d'intensité à projeter sur l'objet de mesure présentent une structure croisée.

7. Procédé selon la revendication 2, **caractérisé en ce que** les gradients d'intensité à projeter sur l'objet de mesure se présentent sous forme de speckles.

8. Procédé selon la revendication 2, **caractérisé en ce que** les gradients d'intensité à projeter sur l'objet de mesure présentent une structure de bruit statistique.

9. Procédé selon l'une des revendications 2 à 8, **caractérisé en ce que** des microbarres sont générées dans le sens horizontal et vertical des barres et sont projetées sur l'objet de mesure avec une fonction d'incrustation d'image dans une image.

10. Procédé selon l'une des revendications 1 à 9, **caractérisé en ce qu'** il est d'abord procédé à une reproduction d'une certaine trame d'intensité adaptée à la géométrie de l'objet de mesure et que la forme en 3 dimensions est mémorisée, et qu'ensuite cette trame de projection contenant la forme de l'objet codée est transmise par un ordinateur de mesure et de commande à un projecteur à microréflecteurs avant d'être projetée sur l'objet de mesure par celui-ci, la déformation provoquée de la trame de projection inversive en fonction de la forme de l'objet de mesure étant fixée d'une manière connue par la caméra de prise de vue, avant d'être transmise à une évaluation technique de mesure consécutive.

11. Dispositif d'exécution du procédé selon la revendication 1, où, en vue du codage d'un objet de mesure pour évaluation consécutive assistée par ordinateur, des structures d'intensité (codes Gray) sont projetées sur l'objet de mesure et où les caractéristiques de surface, la configuration (forme physique) et/ou les dimensions de l'objet de mesure sont déterminées au moyen d'un procédé d'évaluation optoélectronique assisté par ordinateur, en saisissant les déviations des gradients d'intensité provoquées par la structure spatiale de l'objet de mesure, **caractérisé en ce qu'** un projecteur composé de plusieurs microréflecteurs dont la disposition peut être commandée par ordinateur est placé sur le parcours des rayons d'une source lumineuse pour la représentation de microbarres sur un objet de mesure.
